# EUROPEAN PATENT APPLICATION

(11) **EP 3 654 133 A1**
(43) Date of publication of application: **20.05.2020**
(21) Application number: 18832293.7
(22) Date of filing: 09.07.2018

(54) **METHOD FOR SETTING APPROVAL PROCEDURE BASED ON BASE FIELDS**

(30) Priority: 10.07.2017 CN 201710554117
(71) Applicant: Chengdu Qianniucao Information Technology Co., Ltd, Chengdu, Sichuan 610000 (CN)
(72) Inventor: CHEN, Dazhi, Meishan Sichuan 620000 (CN)
(74) Representative: Bandpay & Greuter
(86) International application number: PCT/CN2018/095052
(87) International publication number: WO 2019/011220

(57) **Abstract**

A method for setting an approval process based on basis fields is disclosed in the present invention, including a step of creating an approval process: S1: selecting a form corresponding to the approval process; S2: selecting a basis field for the approval process, where one basis field can be selected by one or more approval processes; and S3: setting a field value set of the selected basis field of the approval process, wherein each field value can only exist in a field value set of one approval process under the basis field. During relation to the approval process, it is determined, according to the field value of the basis field in the approval form, the approval form belongs to which approval process's field value set of the corresponding basis field. In the present invention, when a form is submitted to be approved in an approval process, the form may be automatically related to an approval process according to a field value of a basis field in the form. The process is determined according to content of the basis field in the form, which is simple, clear, and easy to operate. The basis field in the form is changeable, so that different approval requirements in actual management can be met.

## Description

### BACKGROUND

### Technical Field

The present invention relates to a method for system process setting personnel for management software such as ERP to set an approval process, and more particularly to a method for setting an approval process based on basis fields.

### Related Art

Role-based access control (RBAC) is one of the most researched and mature permission management mechanisms for databases in recent years. It is considered to be an ideal candidate to replace conventional mandatory access control (MAC) and discretionary access control (DAC). Conventional discretionary access control has high flexibility but low security. Mandatory access control is highly secure but too restrictive. Role-based access control combines both above, and not only is easy to manage, but also reduces complexity, costs, and probability of errors. Therefore, it has been greatly developed in recent years. The basic idea of role-based access control (RBAC) is to divide different roles according to different functional positions in an enterprise organization view, encapsulate an access permission of database resources in roles, and allow users to indirectly access the database resources by assigning different roles to the users.

A large number of tables and views are often built in large-scale application systems, which makes the management and permissions of database resources very complicated. It is very difficult for the user to directly manage the access and permissions of the database resources. It requires the user to have a very thorough understanding of the database structure and to be familiar with the use of the SQL language. Once the structures or security requirements of the application systems have changed, a large number of complex and cumbersome permission changes are required, and the security vulnerabilities caused by some unexpected authorization errors are very likely to occur. Therefore, designing a simple and efficient permission management method designed for large-scale application systems has become a common requirement for systems and system users.

The role-based permission control mechanism can manage the access permissions of the system simply and efficiently, which greatly reduces the burden and cost of the system permission management, and makes the system permission management more compliant with the business management specifications of the application system.

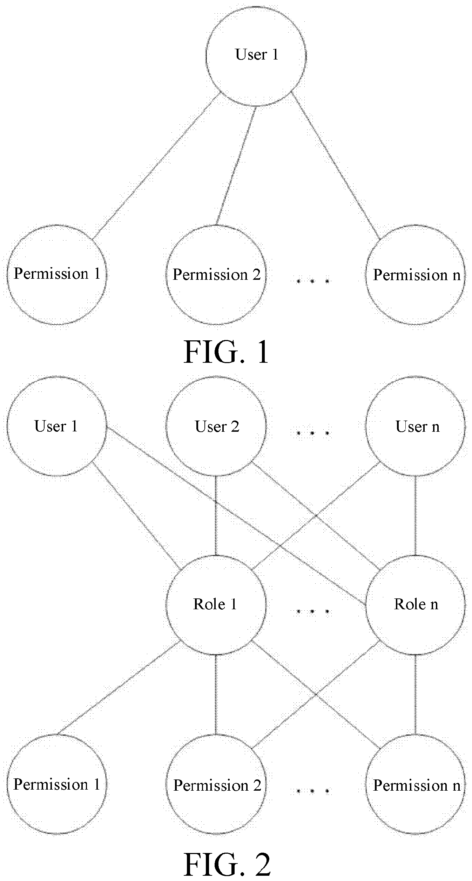

However, the conventional role-based user permission management and workflow control methods adopt a "role-to-user one-to-many" relation mechanism, where the "role" is a group/class in nature. That is, one role may simultaneously correspond to/be related to multiple users. The role is similar to a post/position/type of work or other concepts. The permissions authorized to a user under this relation mechanism are basically divided into the following three forms: 1. As shown in FIG. 1, the permissions are directly authorized to the user, where the disadvantage is that the workload is large and the operation is frequent and cumbersome. In the approval process, an approval operation subject of the approval node is a user, and at a workflow approval node, an employee or user is selected directly as an approval subject. When changes on the employee have occurred (such as transfer or resignation), all processes related to the employee shall be adjusted accordingly. Especially, for changes on an employee in a management position of an enterprise, many approval processes are involved. As the adjustment of the processes involves large workloads and is cumbersome, errors or omissions are likely to occur, affecting the normal operation of the enterprise and even causing unpredictable losses.

Even if the change only occurs in the approval permissions of the employee, it is still necessary to correspondingly adjust the processes related to the employee, and similar problems described above still occur.

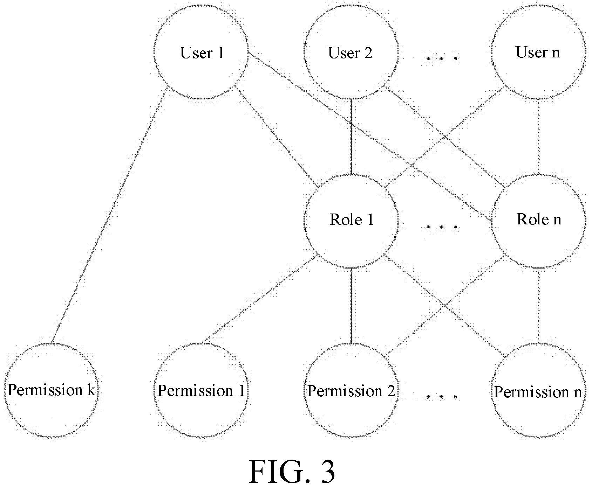

2. As shown in FIG. 2, the role (having the nature of a class/group/post/type of work) is authorized (one role may be related to multiple users), the user obtains permissions through its role, and the approval operation subject is the role having the nature of a group/class. 3. As shown in FIG. 3, the above two methods are combined.

In the above descriptions, as both 2 and 3 need to authorize the role having the nature of a class/group. The way of authorization and workflow control through the role in the nature of a class/group/post/type of work has the following disadvantages: 1. Operations are difficult when the user's permission has changed. In the actual process of using a system, the user's permissions often need to be adjusted during the operation process. For example, in processing of the change in employee's permissions, when the permissions of an employee related to a role have changed, it is improper to change the permissions of the entire role due to the change in the permissions of the individual employee, because this role is also related to other employees whose permissions remain unchanged. To cope with this situation, either a new role is created to fit the employee whose permissions have changed, or permissions are directly authorized to the employee (disengaged from the role) based on permission requirements. The above two processing methods not only take a long time but also cause mistakes easily during the role authorization in the case of a large number of role permissions. It is cumbersome for a user to operate, and errors occur easily, resulting in loss to the system user.

When the approval permissions of the employee or user have changed, either the employee/user is disengaged from the role, and at a workflow approval node, the employee/user is directly selected as an approval subject, or a new role is added to meet the requirements of the approval process. In the first method, when changes on an employee have occurred (such as transfer or resignation), all processes related to the employee shall be adjusted accordingly. Especially, for changes on an employee in a management position of an enterprise, many approval processes are involved. As the adjustment of the processes involves large workloads, errors or omissions are likely to occur, affecting the normal operation of the enterprise and even causing unpredictable losses. Even if the change only occurs in the approval permissions of the employee, it is still necessary to correspondingly adjust the processes related to the employee, and similar problems described above still occur. In the second method, adding a new role involves creation, relation, and authorization of the role. Especially when there are many roles and many users related to the roles, it is difficult to remember which users are related to the role.

2. It is difficult to remember the specific permissions contained in a role for a long time. If the role has many permission function points, as time goes by, it is difficult to remember the specific permissions of the role, and it is even more difficult to remember the differences in permissions of roles with similar permissions. The permissions of similar roles are also easily confusable. If a new user needs to be related, it is impracticable to accurately determine how to select a relation.

3. Because user permissions change, more roles will be created (if new roles are not created, direct authorization to the user will be increased greatly), and it is more difficult to distinguish specific differences between permissions of the roles.

4. When a user is transferred from a post, if many permissions of the transferred user need to be assigned to other users, distinguishing these permissions of the transferred user and then creating roles to relate to other users respectively are necessary during the processing. Such operations are not only complicated and time-consuming, but also prone to errors.

In addition, in a conventional approval process setting method, only one approval process can be created for one form (only one approval process can be used during the same period), and all submissions of the form go through this process. A process flow condition may be set in the process to guide different approval path directions of process approval. However, when confronted with complicated approval requirements, the flow condition in the process is set to be very complex, and there are an extremely large number of approval path directions in the flow. It is difficult to set a process that completely meets management requirements. Moreover, the setting operation is complicated and error-prone. The modification will be cumbersome, and normal use of related personnel in the process may also be affected during the modification.

### SUMMARY

### Technical Problems

The object of the present invention is to overcome the deficiencies of the prior art, and provide a method for setting an approval process based on basis fields. When a form (form data) is submitted to be approved in an approval process, the approval process may be automatically related according to a basis field in the approval form (a form corresponding to the form data), and a specific process for approval is determined according to content of the basis field in the approval form (form data), which is simple, clear, easily comprehensible, and easy to operate. The basis field in the form is changeable, so that different approval requirements in actual management can be met.

### Solutions to Problems

### Technical Solutions

The object of the present invention is achieved by the following technical solutions: A method for setting an approval process based on basis fields includes: a step of determining a basis field for an approval form, a step of creating an approval process, and a step of automatically relating an approval process according to an approval form submitted by a user. The step of determining a basis field for an approval form includes: determining a basis field for each form that needs workflow approval, or determining a basis field for each form for which workflow approval needs to be executed according to the basis field, where only one basis field can be determined for one approval form during the same period. The step of creating an approval process includes the following steps: S1: selecting (or setting) a form corresponding to the approval process, where one form corresponds to one or more approval processes; S2: selecting a basis field for the approval process, where one basis field can be selected by one or more approval processes, and the basis field is a submission role, or a role-nature field in the corresponding form, or a department-nature field in the corresponding form; and S3: setting a field value set of the basis field of the approval process selected in step S2, where each field value (each field value of the basis field) can only exist in a field value set of one approval process under the basis field. There is no sequence relation between the step of "determining a basis field for an approval form" and the step of "creating an approval process".

The step of automatically relating an approval process according to an approval form submitted by a user includes the following steps: SS1: finding, by a system, a determined basis field in the approval form (an approval form corresponding to the form data) according to the approval form (form data) submitted by the user; SS2: according to the basis field determined in step SS1, if no corresponding approval process can be found based on the basis field in the approval form, displaying "no corresponding approval process" (making a prompt of "no corresponding approval process"), and if a corresponding approval process can be found based on the basis field in the approval form, finding all approval processes corresponding to the basis field, and proceeding to step SS3, or if a corresponding approval process can be found based on the basis field in the approval form, directly proceeding to step SS3; and SS3: determining, according to a field value of the basis field in the approval form (form data), the approval form belongs to which approval process's field value set of the corresponding basis field, then approving the approval form (form data) using this approval process, and completing a relation of the approval form (form data) to the approval process.

If the selected basis field is a submission role or the role-nature field in the corresponding form, all the field values in the field value set are roles; and if the selected basis field is the department-nature field in the corresponding form, all the field values in the field value set are departments.

The field value set includes a null field value, an approval process corresponding to a form in which the field value of the selected basis field is null is set when approval processes are set, and when content of the basis field in the approval form (form data) submitted by the user is null, this approval process is used for approval.

When the selected basis field only corresponds to a unique approval process, there is a field value option "all" in the field value set of the selected basis field of the approval process and "all" is selected. If the determined basis field in the approval form (an approval form corresponding to the form data) submitted by the user is the same as the selected basis field of the approval process, the approval process is used for approving the submitted approval form (form data) regardless of the field value of the basis field in the approval form (form data) submitted by the user, and also used for approving subsequent newly-added field values of the basis field (that is, all processes related to the newly-added field values of the basis field are this approval process).

The role-nature field in the form and the department-nature field in the form are both radio mandatory fields. (For example, content of a "contract signing department" field in a contract form should be a radio and mandatory/required field, and only in this case can the field be selected as a basis field).

The role is an independent individual rather than a group/class, one role can only be related to a unique user during the same period, and one user is related to one or more roles.

The role belongs to a certain department, the role is unique under the department, the role is authorized according to work content of the role, and the user obtains a permission through its relation to the role.

During cross-department transfer of a user, the user's relation to the role in the original department is canceled first, and then the user is related to a role in a new department.

The approval process is based on a three-layer structure model of user-role-permission that includes: a role layer, where an operation subject of process approval in a workflow is a role, each role is an independent individual rather than a group/class, one role can only be related to a unique user during the same period, and one user is related to one or more roles; a permission layer composed of permissions required to be used in the execution of the workflow, where each permission is directly authorized to the role; and a user layer, where a user determines an approval task in the approval process through a related role, and performs an approval operation with the permission of the related role.

The approval process includes: one start node for initiating an approval process; at least one approval node for selecting an approval role and authorizing the approval role; and one end node, at which the approval process is ended.

### Beneficial Effects of the Invention

### Beneficial Effects

The present invention has the following beneficial effects: 1. When a form (form data) is submitted to be approved in an approval process, the approval process may be automatically related according to a basis field in the approval form (a form corresponding to the form data), and a specific process for approval is determined according to content of the basis field in the approval form (form data), which is simple, clear, easily comprehensible, and easy to operate. The basis field in the form is changeable, so that different approval requirements in actual management can be met.

For example, when designing a process, a process designer sets a current basis field in a contract form to "contract signing role", sets all approval processes under the contract form, and determines a basis field of each approval process and a field value set of the basis field.

A submission role-role 5 submits a contract form (a contract/form data). The contract form (this contract) includes the following fields: a contract signing role: role 1 (the contract signing role is a field, and role 1 is the content/value of the field); a contract responsible role: role 2; a contract signing department: department 1; and a contract responsible department: department 2. After the user submits the contract form (this contract), the system will automatically find that the basis field (the current basis field) corresponding to (set for) the current contract form (a contract form corresponding to this contract) is "contract signing role", thus finding multiple approval processes corresponding to "contract signing role", and finally, according to the field value "role 1" of the "contract signing role" in the contract form (this contract), determine a unique approval process of which the field value set of the "contract signing role" basis field includes "role 1".

2. In the present application, one or more approval processes may be created for a form. When only one process is created, the field value of the basis field may be set to "all", and if the determined basis field in the approval form (form data) submitted by the user is the same as the selected basis field of the approval process, the approval process is used for approving the submitted approval form regardless of the field value of the basis field, and also used for approving subsequent newly-added field values of the basis field, which is simple and convenient. In a complicated application scenario, for example, in a system with three business divisions that sell different goods, only one approval process can be created for a sales contract form in a conventional method, and complicated flow conditions and approval path directions need to be set during creation, which involves complicated settings and is prone to errors, and an approval process that fully meets the management requirements can hardly be set. In the present application, three approval processes may be created for the sales contract form to meet sales contract approval requirements of the three business divisions, and meanwhile, a system user may also autonomously determine whether to use a "contract signing department" field, a "submission role" field, or other fields to execute (select/determine) approval (approval process) of the contract, thus meeting the user's requirement more accurately. In a use process, it is clear and easy for a process user to understand and make modification, and usage of other processes is not affected during modification.

Because the user may select different basis fields in different forms as required and may also change the basis fields, different management requirements on different forms are well satisfied. For example, some system users want to execute an approval process as a "contract signing role" (that is, "contract signing role" is used as the current basis field in the contract form, and when a contract is submitted to be approved, an approval process corresponding to the "contract signing role" field in the contract form is used to execute related approval) during contract approval. However, some users want to execute an approval process as a "contract signing department", but other users also want to determine an approval process as a "submitter". The system user may change the basis field in the form freely as required to solve this problem (after the basis field in the form has changed, all submitted form data is approved by using an approval process corresponding to the current basis field in the corresponding form. For example, in the case that the current basis field "contract signing role" is replaced with "contract signing department", "contract signing department" is now the current basis field. For example, if a contract is submitted later to be approved, the approval is performed by using an approval process corresponding to the current basis field "contract signing department" of the contract form, rather than the approval process corresponding to "contract signing role", that is, related approval for the submitted form data is executed by using an approval process corresponding to the current basis field in its corresponding form).

3. Different forms need different fields to determine which process to go through. For example, a production order needs a submitter, reimbursement approval needs a reimbursement applicant, and contract approval needs a contract signer. Not all approval processes are determined based on a form submitter. Regardless of a submitter, a process is determined based on a role or a department corresponding to a basis field (the current basis field), and such a setting method is easier to operate, is well applicable to approval of different forms, and can better meet actual operation and management requirements of enterprises.

4. The subject of the approval operation in the workflow is a role that is an independent individual rather than a conventional role having the nature of a group/class. Even if changes on an employee/a user have occurred (such as transfer or resignation), it is only necessary to re-relate a new employee to the role in the approval process, or if the approval permissions of the employee have changed, it is only necessary to adjust the approval permissions of the role accordingly, but not necessary to reset/adjust the process. As the setting is convenient and no errors or omissions will occur, the normal operation of the enterprise will not be affected, and the reliability of the workflow is greatly improved. When the role having the nature of a post number is taken as a subject of approval authorization at a node of the approval link, the user determines (obtains) which approval tasks are available according to the role. The user only needs to perform approval operations based on the permissions of the related role. It is clear and simple to understand that each role having the nature of a post number/work station number is a minimum unit of the subject of work. The present application can well satisfy different approval requirements against each role.

5. In the present application, the role is one-to-one related to the user. One role can only be related to a unique user during the same period. The advantage of this is that permissions can be obtained (that is, the user obtains the permissions of the related role) by merely relating the user to the role, and changes in the permissions of the role are much fewer than the changes in the permissions of the user in a conventional mechanism. Few changes occur in the quantity of roles that are each an independent individual in nature (a post number/a work station number in nature). Although there is large employee turnover, few changes occur in the post number/work station number (even if there is no change in a certain period, that is, the role does not change). This greatly simplifies user's permission management and reduces system overheads.

6. The operations such as dynamic management, recruitment, and transfer are simple, convenient, efficient and highly reliable. The application of recruitment/departure/transfer in the approval process is simple. The subject of the approval operation in the workflow is a role. When an employee/a user has changed, the approval process does not need to be reset, and it is only necessary for a user to cancel the relation to the role or relate to the role: For the user who is no longer in the role of the post number/work station number, the relation to the role is canceled; and the user who takes over the post number/work station number is related to the role of the post number. Therefore, the user related to the role automatically obtains related tasks and permissions of the role in the approval workflow, without resetting the approval workflow or re-authorizing the role in the workflow, thus greatly improving the efficiency, security, and reliability of the process setting.

For example, because a user Zhang San is transferred or departs from a post, Zhang San no longer works as a role of "purchaser 3", and Zhang San then cancels the relation to the role. Meanwhile, Li Si takes over the work in the role of "purchaser 3", and then Li Si is related to the role, so Li Si automatically obtains the approval tasks and the approval permissions of the role of "purchaser 3" in the approval process.

7. The conventional permission management mechanism defines the role as the nature of a group, a work type, a class or the like. The role is in a one-to-many relation to the user. In the actual process of using a system, the user's permissions often need to be adjusted during the operation process. For example, in processing of the change in an employee's permissions, when the permissions of an employee related to the role have changed, it is improper to change the permissions of the entire role due to the change of the permissions of the individual employee, because this role is also related to other employees whose permissions remain unchanged. To cope with this situation, either a new role is created to fit the employee whose permissions have changed, or permissions are directly authorized to the employee (disengaged from the role) based on permission requirements. The above two processing methods not only take a long time but also cause mistakes easily during the role authorization in the case of a large number of role permissions. It is cumbersome for a user to operate, and errors occur easily, resulting in loss to the system user.

However, under the method of the present application, as the role is an independent individual, the object can be achieved by changing the permissions of the role. Although the method of the present application seems to increase the workload during system initialization, by means of copying or the like, the role can be created or authorized more efficiently than the conventional roles having the nature of a group. As it is unnecessary to consider the commonality of the roles of a group nature when satisfying the related users, the solutions in the present application make the permission setting clear and explicit. Especially after the system has been used for a period of time (the permissions of the user/role have changed dynamically), the solutions in the present application can significantly improve the permission management efficiency for the system user when using the system, make the dynamic authorization simpler, more convenient, clearer and more explicit, and improve the efficiency and reliability of the permission setting.

8. The conventional group-based role authorization method is prone to errors. The method provided in the present application significantly reduces the probability of authorization errors, because the method of the present application only needs to consider the role as an independent individual, without considering the commonalities of multiple users related to the role of the group nature under the conventional method. Even if the authorization errors occur, only the user related to the role is affected. However, in the case of the conventional role of the group nature, all users related to the role will be affected. Even if the authorization errors occur, the correction method of the present application is simple and takes a short time, while in the case of the conventional role of a group nature, the commonality of the permissions of all users related to the role needs to be considered during the error correction. The modification is cumbersome, complex, and error-prone when the role has many function points, and in many cases, the problem cannot be solved unless a new role is created.

9. In the conventional group-based role authorization method, if the role has many permission function points, as time goes by, it is difficult to remember specific permissions of the role, and it is even more difficult to remember the differences in permissions of roles with similar permissions. If a new user needs to be related, it cannot be accurately determined how to select a relation. In the method of the present application, the role itself has the nature of a post number/work station number, and the selection can be made easily.

10. When a user is transferred from a post, if many permissions of the transferred user need to be assigned to other users, in processing, distinguishing the permissions of the transferred user and then creating roles to relate to other users respectively are necessary. The operations are complicated, time-consuming, and prone to errors.

The method of the present application is as follows: The transferred user is related to several roles. When the user is transferred, the relation of the user to the roles in the original department is first canceled (the canceled roles may be re-related to other users), and then the user is related to a role in a new department. The operation is simple and not error-prone.

### BRIEF DESCRIPTION OF THE DRAWINGS

### DESCRIPTION OF THE DRAWINGS

FIG. 1 is a schematic diagram in which a system directly authorizes a user in the prior art;
FIG. 2 is a schematic diagram in which a system authorizes a role having the nature of a group/class in the prior art;
FIG. 3 is a schematic diagram in which a system both directly authorizes a user and authorizes a role having the nature of a group/class/in the prior art;
FIG. 4 is a schematic diagram in which a system authorizes a user through a role having the nature of an independent individual according to the present invention; and
FIG. 5 is a flowchart of a workflow approval process according to the present invention.

### DETAILED DESCRIPTION

### Description of Embodiments

The technical solutions of the present invention will be described in further detail below with reference to the accompanying drawings, but the protection scope of the present invention is not limited to the following descriptions.

[Embodiment 1] A method for setting an approval process based on basis fields includes a step of determining a basis field for an approval form, a step of creating an approval process, and a step of automatically relating an approval process according to an approval form submitted by a user. The step of determining a basis field for an approval form includes: determining a basis field for each form that needs workflow approval, or determining a basis field for each form for which workflow approval needs to be executed according to the basis field, where only one basis field can be determined for one approval form during the same period. The step of creating an approval process includes the following steps: S1: selecting (or setting) a form corresponding to the approval process, where one form corresponds to one or more approval processes; S2: selecting a basis field for the approval process, where one basis field can be selected by one or more approval processes, and the basis field is a submission role, or a role-nature field in the corresponding form, or a department-nature field in the corresponding form; and S3: setting a field value set of the basis field of the approval process selected in step S2, where each field value (each field value of the basis field) can only exist in a field value set of one approval process under the basis field. There is no sequence relation between the step of "determining a basis field for an approval form" and the step of "creating an approval process." If the selected basis field is the submission role or the role-nature field in the corresponding form, all the field values in the field value set are roles; and if the selected basis field is the department-nature field in the corresponding form, all the field values in the field value set are departments. The step of automatically relating an approval process according to an approval form submitted by a user includes the following steps: SS1: finding, by a system, a determined basis field in the approval form (an approval form corresponding to the form data) according to the approval form (form data) submitted by the user; SS2: according to the basis field determined in step SS1, if no corresponding approval process can be found based on the basis field in the approval form (no approval process uses the basis field in the form as its basis field), displaying "no corresponding approval process" (making a prompt of "no corresponding approval process"), and if a corresponding approval process can be found based on the basis field in the approval form, finding all approval processes corresponding to the basis field, and proceeding to step SS3, or if a corresponding approval process can be found based on the basis field in the approval form, directly proceeding to step SS3; and SS3: determining, according to a field value of the basis field in the approval form (form data), the approval form belongs to which approval process's field value set of the corresponding basis field, then approving the approval form (form data) using this approval process, and completing the relation of the approval form (form data) to the approval process.

An approval process may be determined according to field content of a basis field in a form. Multiple approval processes are assigned to one approval form, and a process is determined according to field content of a basis field (current basis field) in the approval form, which is simple, clear, and easy to understand.

For example, "contract signing department" on a contract form is determined as a basis field (current basis field) of the form. Three approval processes select the contract form, and also select "contract signing department" in the contract form as the basis field. The three approval processes are processes A, B, and C respectively. A field value set of the contract signing department of the approval process A includes "sales department I, sales department II, sales department III, and so on". A field value set of the contract signing department of the approval process B includes "sales department IV, sales department V, sales department VI, and so on". A field value set of the contract signing department of the approval process C includes "sales department VII, sales department VIII, sales department IX, and so on". Now, if a user submits a contract form (a contract) that needs to be approved, where "contract signing department" on the form (contract) is sales department IX, the submitted contract form (this contract) is approved by the approval process C. If "contract signing department" of the contract form (contract) is sales department V, the submitted contract form is approved by the approval process B.

It should be particularly noted that, the sales department I can only be contained in the field set of the basis field "sales signing department" of the approval process A, but cannot simultaneously exist in the field set of the basis field "sales signing department" of the approval process B or the approval process C.

In this embodiment, the basis field in the form is changeable. If the basis field has changed, for example, the basis field has changed from "contract signing department" to "contract signing role" (that is, in the case that the current basis field "contract signing department" is replaced with "contract signing role", "contract signing role" is the current basis field) and a user submits a contract form (contract) to be approved now, an approval process under "contract signing role" (current basis field) approves the submitted contract form/contract data according to a related rule (which is irrelevant to an approval process under "contract signing department").

In a complicated application scenario, for example, in a system with three business divisions that sell different goods, only one approval process can be created for a sales contract form in a conventional method (only one approval process can be used during the same period), and complicated flow conditions and approval path directions need to be set during creation, which involves complicated settings and is prone to errors, and an approval process that fully meets the management requirements can hardly be set. In the present application, three approval processes can be created for a sales contract form to meet sales contract approval requirements of the three business divisions. Meanwhile, a system user may also autonomously determine whether to use a "contract signing department" field, a "submission role" field, or other fields to approve the contract, thus meeting the user's requirement more accurately. In a use process, it is clear and easy for a process user to understand and make modification, and usage of other processes is not affected during modification.

Because the user may select different basis fields in different forms as required and may also change the basis fields, different management requirements of different forms are well satisfied. For example, during contract approval, some system users want to execute an approval process as a "contract signing role". However, some users want to execute an approval process as a "contract signing department", but other users want to determine an approval process as a "submitter". The system user may change the basis field in the form freely as required to solve this problem (after the basis field in the form has changed, the submitted form data is all approved by using an approval process corresponding to the current basis field in a corresponding form. For example, in the case that the current basis field "contract signing role" is replaced with "contract signing department", "contract signing department" is the current basis field. For example, if a contract is submitted later to be approved, the approval is performed by using an approval process corresponding to the current basis field "contract signing department" of the contract form, rather than the approval process corresponding to "contract signing role", that is, related approval for the submitted form data is executed by using an approval process corresponding to the current basis field in its corresponding form).

[Embodiment 2] The field value set includes a null field value. An approval process corresponding to a form in which the field value of the selected basis field is null is set when approval processes are set, and when content of the basis field in the approval form (form data) submitted by the user is null, this approval process is used for approval.

For example, when a contract is submitted to be approved, if the value of the contract signing department field in the contract form (form data) is null (because the contract signing department of the contract form is not a mandatory field), an "approval process, of which the field value set of the contract signing department includes null, under the determined basis field in the contract form" approves the submitted contract form.

[Embodiment 3] When the selected basis field only corresponds to a unique approval process, there is a field value option "all" in the field value set of the selected basis field of the approval process and "all" is selected. If the determined basis field in the approval form (an approval form corresponding to the form data) submitted by the user is the same as the selected basis field of the approval process, the approval process is used for approving the submitted approval form (form data) regardless of the field value of the basis field in the approval form (form data) submitted by the user, and also used for approving subsequent newly-added field values of the basis field (that is, all processes related to the newly-added field values of the basis field are this approval process).

For example, "contract signing department" on a contract form is determined as the basis field (current basis field) of the form, and only one approval process selects the "contract signing department" as the basis field, where the field value set of the contract signing department of the approval process includes "all" ("all" is merely a form of expression, and may also be expressed as "full" or the like). In this case, regardless of the field value of the contract signing department of the contract form (form data) submitted for approval (including the null field value and subsequent-newly added field value), the approval is performed by this approval process.

[Embodiment 4] In this embodiment, the role-nature field in the form and the department-nature field in the form are both radio mandatory fields. In this case, the circumstance that the field value is null in Embodiment 2 does not exist. (For example, content of a "contract signing department" field in a contract form should be a radio and mandatory/required field, and only in this case can the field be selected as a basis field).

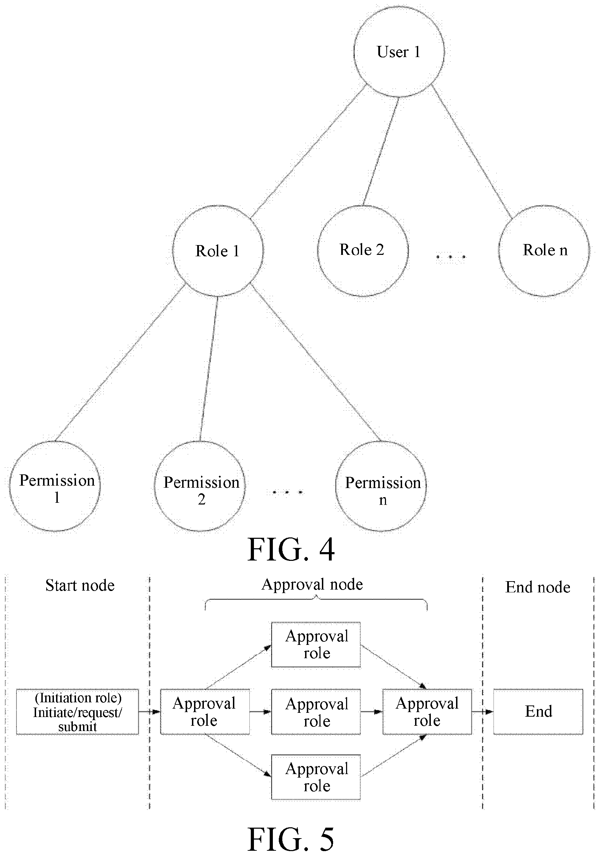

[Embodiment 5] In this embodiment, as shown in FIG. 4, the role is an independent individual rather than a group/class, one role can only be related to a unique user during the same period, and one user is related to one or more roles.

The approval process is based on a three-layer structure model of user-role-permission that includes: a role layer, where an operation subject of process approval in a workflow is a role, each role is an independent individual rather than a group/class, one role can only be related to a unique user during the same period, one user is related to one or more roles, and the role is composed of: a post name + a post number; a permission layer composed of permissions required to be used in the execution of the workflow, where each permission is directly authorized to a role; and a user layer, where a user determines an approval task in the approval process through a related role, and performs an approval operation with the permission of the related role.

The building of the three-layer structure model of user-role-permission includes the following steps: creating a role, where each role is an independent individual rather than a group/class; authorizing the created roles respectively; and relating a user to a role, where one role can only be related to a unique user during the same period, and one user is related to one or more roles. The created roles may be respectively authorized first, or the user may be related to the role first.

As shown in FIG. 5, the approval process includes a start node, at least one approval node (for example, there are 5 approval nodes in FIG. 5), and an end node. The start node initiates/requests/submits a workflow. Further, an initiation role that initiates/requests/submits the workflow serves as the start node, or the first approval node serves as the start node. The approval node selects an approval role and authorizes the approval role. A system determines an approval process based on a form submitted by the initiation role. One or more approval processes are designed for a form that requires a workflow, but one role can only select an approval process under the form (the same role can exist only in one of the processes in the same form). For example, there are two processes such as a P1 process and a P2 process in a purchase contract form. If a role A is selected at a start node of the P1 process, the role A cannot be selected any more at the start node of the P2 process. In this case, approval of the purchase contract is newly added to the role A, and the purchase contract submitted to be approved enters the P1 process automatically.

End node: when the approval process comes to the end node, the approval process is ended, and the end node does not perform an approval operation; or the last approval node serves as the end node and the end node needs to perform an approval operation.

The advantage of the method for authorizing a user through a role having the nature of an independent individual is analyzed. The user determines (obtains) the permissions through its relation to the role. If the permissions of the user need to be modified, the permissions possessed by the role are adjusted to achieve the purpose of changing the permissions of the user related to the role. Once the user is related to the role, the user owns all operation permissions of the role.

A role is in a one-to-one relation to a user (when the role is related to one user, other users can no longer be related to the role; and if the role is not related to the user, the role can be selected to be related to another user). A user is in a one-to-many relation to roles (one user may be related to multiple roles at the same time).

Definition of a role: A role is not in the nature of a group/class/category/post/position/type of work or the like, but is of a non-collective nature. The role is unique and is an independent individual. Applied in an enterprise or an institution, the role corresponds to a post number (the post number herein is not a post, and one post may have multiple employees at the same time, but one post number can only correspond to one employee during the same period).

For example, in a company system, the following roles may be created: a general manager, a deputy general manager 1, a deputy general manager 2, a manager of Beijing sales department I, a manager of Beijing sales department II, a manager of Beijing sales department III, a Shanghai sales engineer 1, a Shanghai sales engineer 2, a Shanghai sales engineer 3, a Shanghai sales engineer 4, a Shanghai sales engineer 5, and so on. The relation of users to roles is as follows: if Zhang San, the company's employee, serves as a deputy general manager 2 of the company and also serves as a manager of Beijing sales department I, roles to which Zhang San needs to be related are the deputy general manager 2 and the manager of Beijing sales department I, and Zhang San owns the permissions of the two roles.

The concept of conventional roles is a group/class/post/position/type of work in nature, and one role can correspond to multiple users. In the present application, the concept of "role" is equivalent to a post number/work station number, and is also similar to the role in a film and television drama: one role in the same period (in childhood, juvenile, middle-age...) can be played by only one actor or actress, but one actor or actress may play multiple roles respectively.

After the role is created, a user may be related to the role in the process of creating the user, or may be related to the role at any time after the user is created. After the user is related to the role, the user may be released from the relation to the role at any time, and the relation of the user to another role may be created at any time.

The role is composed of: a post name + a post number. For example, roles of a workshop worker 1, a workshop worker 2, a workshop worker 3, and the like each are an independent individual which is equivalent to a concept of a post number or a work station number, but different from a role in a conventional permission management system. The concept of the role in the conventional permission management system has the nature of a group/class such as a post/a position/a type of work or the like.

The following example shows the relationship among an employee, a user, and a role after Zhang San, an employee, enters a company as follows: 1. Recruiting: after the employee is recruited, the role of the corresponding post number/work station number is directly selected for the user (employee) to be related. For example, when Zhang San has joined the company (the company has assigned a user for Zhang San) and works at the sales department I to be responsible for sales of refrigerator products in Beijing area (the corresponding role is "sales engineer 5" under the sales department I), the user Zhang San directly selects the role "sales engineer 5" to be related.

2. Adding position: After Zhang San has worked for a period of time, the company will further arrange Zhang San to be responsible for sales of TV products in Beijing area (the corresponding role is "sales engineer 8" under the sales department I) and to serve as a supervisor of an after-sales department (the corresponding role is "after-sales department supervisor 1"). Therefore, two roles, that is, "sales engineer 8" under the sales department I and "after-sales department supervisor 1" under the after-sales department, are additionally related to the user Zhang San. In this case, the employee Zhang San is related to three roles: "sales engineer 5" and "sales engineer 8" under the sales department I, and "after-sales department supervisor 1" under the after-sales department. Therefore, the user Zhang San owns the permissions of the three roles.

3. Reducing position: After a while, the company has decided to let Zhang San serve as an after-sales department manager (corresponding to a role "after-sales manager" under the after-sales department) without taking up other positions any more. Therefore, the user Zhang San is related to the role "after-sales department manager" under the after-sales department, and is released from the relation to the previous three roles ("sales engineer 5" and "sales engineer 8" under the sales department I, and "after-sales department supervisor 1" under the sales department) at the same time. In this case, the user Zhang San owns only the permissions of the role "after-sales department manager" under the after-sales department.

4. Adjusting permissions of a role (adjusting the permissions of the role itself): if the company has decided to add permissions to the after-sales department manager, the permissions only need to be added to the role of the after-sales department manager. With the increase in the permissions of the role of the after-sales department manager, the permissions of the user Zhang San are also increased.

5. Resigning: After one year, Zhang San resigns. It is only necessary to cancel the relation of the user Zhang San to the role "after-sales department manager" under the after-sales department.

For example, during the dynamic operation of the company, recruiting and resigning of staff often occur continuously, but post numbers/work station numbers seldom change (or even remain unchanged within a period of time).

In the conventional authorization method, in the case of a large quantity of system function points, authorizing a role conventionally as a group/class in nature involves a large and cumbersome workload and is very error-prone, and errors are not easily detectable in a short time and tend to cause loss to a system user.

In the authorization method of the present application, the role in the nature of a post number or work station number is authorized in the present application, and the user is related to the role to determine (obtain) its permissions. Therefore, the permissions of the user are controlled by a simple user-role relation, such that the permissions can be controlled in a simple, easily operable, clear, and explicit manner, thereby significantly improving the efficiency and reliability of authorization.

The above is only a preferred embodiment of the present invention. It should be understood that the present invention is not limited to the forms disclosed herein, and is not to be construed as the exclusion to the other embodiments, but may be used in various other combinations, modifications and environments. Modification can be made according to the techniques or knowledge of the above teachings or related art within the conceptive scope herein. All changes and modifications made by those skilled in the art are intended to be within the protection scope of the appended claims.

## Claims

1. A method for setting an approval process based on basis fields, comprising a step of determining a basis field for an approval form, a step of creating an approval process, and a step of automatically relating an approval process according to an approval form submitted by a user:
the step of determining a basis field for an approval form comprises: determining a basis field for each form that needs workflow approval, or determining a basis field for each form for which workflow approval needs to be executed according to the basis field, wherein only one basis field can be determined for one approval form during the same period;
the step of creating an approval process comprises the following steps:
S1: selecting a form corresponding to the approval process, wherein one form corresponds to one or more approval processes;
S2: selecting a basis field for the approval process, wherein one basis field can be selected by one or more approval processes, and the basis field is a submission role, or a role-nature field in the corresponding form, or a department-nature field in the corresponding form; and
S3: setting a field value set of the basis field of the approval process selected in step S2, wherein each field value can only exist in a field value set of one approval process under the basis field;
the step of automatically relating an approval process according to an approval form submitted by a user comprises the following steps:
SS1: finding, by a system, a determined basis field in the approval form according to the approval form submitted by the user;
SS2: according to the basis field determined in step SS1, if no corresponding approval process can be found based on the basis field in the approval form, displaying "no corresponding approval process", and if a corresponding approval process can be found based on the basis field in the approval form, finding all approval processes corresponding to the basis field, and proceeding to step SS3, or if a corresponding approval process can be found based on the basis field in the approval form, directly proceeding to step SS3; and
SS3: determining, according to a field value of the basis field in the approval form, the approval form belongs to which approval process's field value set of the corresponding basis field, then approving the approval form using this approval process, and completing the relation of the approval form to the approval process.

2. The method for setting an approval process based on basis fields according to claim 1, wherein if the selected basis field is the submission role or the role-nature field in the corresponding form, all the field values in the field value set are roles; and if the selected basis field is the department-nature field in the corresponding form, all the field values in the field value set are departments.

3. The method for setting an approval process based on basis fields according to claim 1, wherein the field value set comprises a null field value, an approval process corresponding to a form in which the field value of the selected basis field is null is set when approval processes are set, and when content of the basis field in the approval form submitted by the user is null, this approval process is used for approval.

4. The method for setting an approval process based on basis fields according to claim 1 or 3, wherein when the selected basis field only corresponds to a unique approval process, there is a field value option "all" in the field value set of the selected basis field of the approval process and "all" is selected; if the determined basis field in the approval form submitted by the user is the same as the selected basis field of the approval process, the approval process is used for approving the submitted approval form regardless of the field value of the basis field in the approval form submitted by the user, and also used for approving subsequent newly-added field values of the basis field.

5. The method for setting an approval process based on basis fields according to claim 1, wherein the role-nature field in the form and the department-nature field in the form are both radio mandatory fields.

6. The method for setting an approval process based on basis fields according to claim 1, wherein the role is an independent individual rather than a group/class, one role can only be related to a unique user during the same period, and one user is related to one or more roles.

7. The method for setting an approval process based on basis fields according to claim 6, wherein the role belongs to a certain department, the role is unique under the department, the role is authorized according to work content of the role, and the user obtains a permission through its relation to the role.

8. The method for setting an approval process based on basis fields according to claim 7, wherein during cross-department transfer of a user, the user's relation to the role in the original department is canceled first, and then the user is related to a role in a new department.

9. The method for setting an approval process based on basis fields according to claim 6, wherein the approval process is based on a three-layer structure model of user-role-permission that comprises:
a role layer, wherein an operation subject of process approval in a workflow is a role, each role is an independent individual rather than a group/class, one role can only be related to a unique user during the same period, and one user is related to one or more roles;
a permission layer composed of permissions required to be used in the execution of the workflow, wherein each permission is directly authorized to a role; and
a user layer, wherein a user determines an approval task in the approval process through a related role, and performs an approval operation with the permission of the related role.

10. The method for setting an approval process based on basis fields according to claim 1, wherein the approval process comprises:
one start node for initiating an approval process;
at least one approval node for selecting an approval role and authorizing the approval role; and
one end node, at which the approval process is ended.
